# EUROPÄISCHE PATENTANMELDUNG

(11) **EP 3 398 469 A1**
(43) Veröffentlichungstag der Anmeldung: **07.11.2018**
(21) Anmeldenummer: 18170632.6
(22) Anmeldetag: 03.05.2018
(51) Int. Cl.: A43B 13/18, A43B 13/22, B29D 35/14, A43B 13/12, A43B 5/00

(54) **SOHLE FÜR EINEN SCHUH**

(30) Priorität: 05.05.2017 DE 102017207613
(71) Anmelder: Fenix Outdoor Development And CSR AG, 6300 Zug (CH)
(72) Erfinder: SETTELE, Andreas, 85256 Vierkirchen (DE)
(74) Vertreter: Grünecker Patent- und Rechtsanwälte PartG mbB

(57) **Zusammenfassung**

Die Erfindung betrifft eine Sohle für einen Schuh, insbesondere Outdoor-Schuh, mit einer Schale aus hartem Kunststoff und einem in der Hartschale liegenden integrierten dämpfenden Sohlenteil, wobei auf der Unterseite der Schale zumindest ein Profilelement aus rutschfestem Material befestigt ist.

## Beschreibung

Die Erfindung betrifft eine Sohle für einen Schuh, insbesondere Outdoor-Schuh, wie beispielsweise Bergschuh, Wanderschuh, Trekkingschuh etc. Im Outdoor-Bereich sind gut gedämpfte Sohlen von Vorteil, erhöhen den Tragekomfort und schonen die Gelenke. Insbesondere bei Running-Schuhen gibt es bereits weiche Sohlen mit guter Dämpfung. Bei weichem Material kann es jedoch leicht zu mechanischen Beschädigungen kommen, insbesondere durch widrige Umwelteinflüsse, wie steinige Wege, Stöße oder falsches Ausziehen. Aus diesem Grund sind dämpfende weiche Materialien für Outdoor-Schuhe, insbesondere Berg- und Trekkingschuhe, nicht geeignet.

Hiervon ausgehend liegt der vorliegenden Erfindung die Aufgabe zugrunde, eine Sohle für einen Schuh im Outdoor-Bereich bereitzustellen, die einerseits eine Dämpfung mit sich bringt, andererseits auch robust, rutschfest und einfach zu fertigen ist.

Erfindungsgemäß wird diese Aufgabe durch die Merkmale des Anspruchs 1 gelöst.

Die erfindungsgemäße Sohle weist eine Schale aus Kunststoff auf, sowie ein in der Schale liegendes integriertes dämpfendes Sohlenteil. Die erfindungsgemäße Schale ist fest, widerstandsfähig und mechanisch stabil und schützt das Sohlenteil. Das dämpfende Sohlenteil erlaubt Stöße abzufangen und erhöht somit den Tragekomfort. Dabei gibt es einen Verbund zwischen dämpfendem Sohlenteil und Schale, was bedeutet, dass das Sohlenteil nicht zerstörungsfrei aus der Schale entnommen werden kann, sondern darin integriert ist. Auf der Unterseite, d. h., der Seite, die beim Einsatz der Sohle dem Boden zugewandt ist, ist zumindest ein Profilelement aus rutschfestem Material befestigt.

Erfindungsgemäß ist das dämpfende Sohlenteil in die Schale eingegossen. Eine solche Sohle kann einfach gefertigt werden, wobei durch das Eingießen bereits ein Verbund zwischen Sohlenteil und Schale erzeugt wird. Insbesondere ist die Herstellung mit nur einer Form möglich.Eine Sohle mit einem entsprechendem Aufbau bringt einerseits die Vorteile des dämpfenden Sohlenteils mit sich, und außerdem Beständigkeit durch die Hartschale, die das dämpfende Sohlenteil seitlich und zumindest teilweise an der Unterseite umschließt. Die erfindungsgemäße Sohle weist dadurch, dass an der Unterseite der Sohle zumindest abschnittsweise ein Profilelement aus rutschfestem Material angeordnet ist, eine gute Rutschfestigkeit auf, wie sie für den Outdoor-Bereich erforderlich ist. Eine solche Sohle kann besonders einfach mit herkömmlichen Verfahren erzeugt werden, wobei die Schale beispielsweise mittels Spritzguss in einer dafür vorgesehenen Form gegossen werden kann und auch das dämpfende Sohlenteil mittels Spritzguss in die Schale eingebracht werden kann. Das Profilelement kann auf einfache Art und Weise auf die Unterseite der Schale geklebt werden.

Vorteilhafterweise ist die Schale aus einem thermoplastischen Polymer bzw. Elastomer, insbesondere TPU, d. h. thermischem Polyurethan, gebildet. Dieses Material eignet sich besonders vorteilhaft für die Schale, und ist abriebfest und kann dennoch elastisch sein. Eine solche Schale weist eine lange Lebenszeit auf und schützt das innenliegende Sohlenteil.

Das Sohlenteil ist aus einem elastischen Kunststoff gebildet, insbesondere aus PU, d. h. Polyurethan oder z.B. EVA. Ein Sohlenteil z.B. aus Polyurethan kann kostengünstig und einfach gefertigt werden und weist besonders gute dämmende und dämpfende Eigenschaften auf. Ein solches Material kann eingesetzt werden, obwohl es sehr empfindlich gegen äußere Einflüsse ist, da es von der Schale und dem mindestens einen Profilelement nach außen hin geschützt wird.

Das rutschfeste Material des Profilelements ist vorzugsweise Gummi. Gummi eignet sich besonders vorteilhaft für ein rutschfestes Profil und kann auf einfache Art und Weise auf die Unterseite der Schale geklebt werden.

Gemäß der Erfindung kann somit die Härte der Schale, beispielsweise die Shore-Härte oder die Stauchhärte, größer sein als die Härte des Sohlenteils. Die Rückprallelastizität der Schale kann dabei kleiner sein als die Rückprallelastizität des Sohlenteils.

Vorteilhafterweise weist die Schale an der Unterseite mindestens einen Durchbruch auf, derart, dass das Profilelement direkt an dem Sohlenteil anliegt, insbesondere aufgeklebt ist. Ein entsprechendes Ausführungsbeispiel ist besonders vorteilhaft, da dann durch den mindestens einen Durchbruch erreicht wird, dass die Sohle ausreichend flexibel ist, d. h. beispielsweise, der Vorfuß gut abgerollt werden kann obwohl die Sohle dreilagig und stabil ausgebildet ist. Dabei ist der Durchbruch vorzugsweise zumindest im Vorderfußbereich ausgebildet. Der mindestens eine Durchbruch im Vorderfußbereich kann einen mittleren Durchbruchsbereich aufweisen, der im Wesentlichen länglich ausgebildet ist, und sich im Wesentlichen in Längsrichtung des Schuhs erstreckt, wobei als "Längsrichtung" hier eine Richtung bezeichnet ist, die sich beispielsweise von dem Fersenbereich zum Vorderfußbereich hin erstreckt. Von diesem mittleren Durchbruchsbereich können sich mehrere Seitendurchbruchsbereiche nach außen in Richtung eines Rands der Schale erstrecken. Eine solche Ausgestaltung bringt einerseits ausreichend Stabilität und andererseits eine hervorragende Flexibilität mit sich.

Zusätzlich können gemäß einer bevorzugten Ausführungsform im Vorderfußbereich Schlitze in der Unterseite und/oder der gegenüberliegenden Innenfläche der Schale ausgebildet sein. Die Höhe der Schlitze ist vorzugsweise kleiner als die Höhe der Schale an der entsprechenden Stelle. Das bedeutet, dass sich die Schlitze nicht ganz durch die Schalenunterseite hindurch erstrecken, sondern das Schalenmaterial an den entsprechenden Stellen nur schwächen. Es ist insbesondere vorteilhaft, wenn mehrere Schlitze hintereinander in beiden Seitenbereichen des Unterteils angeordnet sind (die quer, d.h. unter einem Winkel zur Längsachse des Schuhs verlaufen). Dies ermöglicht eine besonders gute Abrolleigenschaft der Sohle. Es ist aber auch möglich, dass sich die Schlitze komplett von unten durch die Unterseite der Schale hindurch erstrecken, d. h., bis zum dämpfenden Sohlenteil. Dann muss jedoch der Schlitz an seiner Unterseite beispielsweise durch das Profilelement abgedeckt werden, um das innen liegende dämpfende Sohlenteil zu schützen. Die Schlitze erstrecken sich vorzugsweise von einem Randbereich der Unterseite der Schale in Richtung Mitte, enden aber beispielsweise bereits vor einem mittleren Durchbruchsbereich. Es ist möglich, dass mindestens ein Schlitz zwischen zwei Seitendurchbruchsbereichen angeordnet ist.

Zusätzlich kann zur Erhöhung der Flexibilität der Sohle auch das Profilelement im Vorderfußbereich Schlitze aufweisen, die sich durch das Profilelement hindurch, vorzugsweise bis zu den Schlitzen in der Schale erstrecken und mit diesem zumindest abschnittsweise in Verbindung stehen. Das heißt, dass die Schlitze in der Schale und im Profilelement vorzugsweise übereinander angeordnet sind. Dies erhöht die Flexibilität nochmals.

Es kann ein Profilelement im Vorderfußbereich angeordnet sein und ein Profilelement im Fersenbereich. Zwischen diesen Profilelementen kann die Schale freigelegt sein. Dieser freigelegte Bereich, der vertieft sein kann, d. h., wenn die Sohle am Boden aufsteht, nicht mit dem Boden in Berührung kommt, ist dann außerordentlich stabil. Es ist auch möglich, dass nur ein Profilelement vorgesehen ist, das sich über die gesamte Unterseite der Sohle d.h. vom Anfanfg des Vorderfußbereichs bis zum Ende des Fersenbereichs erstreckt. Dies kann insbesondere dann vorteilhaft sein, wenn ein besonders großer Durchbruch an der Unterseite vorgesehen ist, insbesondere wenn sich der Durchbruch von einem Vorderfuß Bereich bis zu einem Fersenbereich erstreckt.

Die Schale weist eine Unterseite auf, deren Rand schalenförmig nach oben gezogen ist, wobei insbesondere die Spitze weiter nach oben gezogen ist als die seitlichen nach oben gezogenen Randteile. Somit ist auch die Spitze des Schuhs, die oftmals besonders störenden mechanischen Einflüssen ausgesetzt ist, besonders geschützt. Alternativ ist es auch möglich, dass die Spitze des Profilelements am vorderen Ende der Sohle weiter nach oben gezogen ist, als die seitlich nach oben gezogenen Randteile der Schale.

Von der Innenseite des nach oben gezogenen Randteils können sich mehrere Vorsprünge nach innen in das Sohlenteil hinein erstrecken. Somit ergibt sich ein besonders guter Verbund zwischen Sohlenteil und Schale.

Die Schale kann an ihrer Unterseite auch zumindest eine weitere Aussparung aufweisen, in die das jeweilige Profilelement eingelegt bzw. eingeklebt werden kann, derart, dass vorzugsweise das Profilelement und die Schale zumindest abschnittsweise bündig miteinander abschließen, vorzugsweise rund um das Profilelement bündig abschließen. Eine solche Ausgestaltung bildet einen besonderen Schutz für das Profilelement, das dann seitlich durch das sehr harte Material geschützt werden kann und dessen Unterseite für ausreichende Rutschfestigkeit sorgt. Außerdem kann dann die Gesamthöhe der Sohle reduziert werden damit eine ausreichende Flexibilität gegeben ist.

Die Erfindung betrifft auch einen Schuh, insbesondere Schuh für den Outdoor- und Sportbereich, mit einer Sohle nach mindestens einem der Ansprüche 1 bis 17. Ein solcher Schuh ist insbesondere als Berg- oder Trekkingschuh geeignet, da er eine hervorragende Dämpfung aufweist, und seine Sohle gleichzeitig verschleißfest und rutschfest ist.

Gemäß einem bevorzugten Ausführungsbeispiel ist der schalenförmig nach oben gezogene Rand der Schale im Fersenbereich (also in Längsrichtung betrachtet am hinteren Ende) der Sohle als Kipphebelaufnahme für Steigeisen ausgebildet. Dazu ist vorzugsweise ein Teil des Rands der Schale derart ausgebildet, dass er nach außen vorspringt, derart, dass sich eine Auflagefläche, und somit auch eine entsprechende Kante für den Kipphebel ergibt.

Somit kann ohne einen weiteren Fertigungsschritt die Kipphebelaufnahme zusammen mit der Schale einstückig erzeugt bzw. gegossen werden. Diese Ausführungsform bringt vor allem den Vorteil mit sich, dass im Vergleich zum Stand der Technik weniger Bestandteile zur Fertigung der Sohle notwendig sind.

Das Steigeisen kann zum Beispiel in gängiger Weise über einen Bügel oder ein Körbchen an dem vorderen Sohlenrand und über einen Kipphebel am hinteren Ende der Sohle an der Kipphebelaufnahme befestigt werden. Somit wird auf einfache Art und Weise ein steigeisenfester Schuh realisiert. Gemäß einem bevorzugten Ausführungsbeispiel erstreckt sich der vorspringende Teil des Randes um den Fersenbereich, von einem hinteren Ende der Schale bis zu den Seiten der Schale. Das bedeutet, dass der vorspringende Teil spangenförmig, d.h. zum Beispiel im wesentlichen U-förmig ausgebildet ist. Eine entsprechende Anordnung ermöglicht ein sicheres Anbringen des Kipphebels. Vorteilhafter Weise ist der vorspringende Teil des Randes derart verstärkt, dass er eine größere Wandstärke (im Querschnitt betrachtet) aufweist, als ein Bereich des Randes unterhalb des verstärkten Randes. Obwohl ausschließlich ein Material verwendet wird, kann durch eine entsprechende Verstärkung eine ausreichende Stabilität gewährleistet werden, während ein darunter liegender Bereich flexibler ist und somit einen zufriedenstellenden Gehkomfort sichert.

Gemäß einer bevorzugten Ausführungsform weist der vorspringende Teil des Randes am hinteren Ende der Schale eine erste Höhe h1 auf, die vom hinteren Ende der Schale bis zu den Seiten hin zu nimmt, d.h. sich weiter nach unten erstreckt. Dadurch, dass die entsprechenden Bereiche eine verstärkte Wandstärke aufweisen, ergibt sich insbesondere im Seitenbereich der Ferse eine gute Stabilität. Da die Höhe h1 im Bereich der Ferse kleiner ist als in den Seitenbereichen gibt die Sohle beim Auftreten im Fersenbereich nach, was zu einem erhöhten Tragekomfort beiträgt.

Die Schale kann in ihrer Unterseite mindestens einen Durchbruch aufweisen, wobei sich der mindestens eine Durchbruch vorzugsweise von einem Vorfußbereich bis zu einem Fersenbereich erstreckt und von einem Unterseitenrand begrenzt wird.

Gemäß einem bevorzugten Ausführungsbeispiel weist die Schale an ihrer Unterseite im Bereich von Profilstollen des Profilelements eine größere Wandstärke (in einer Richtung betrachtet die nach oben gerichtete ist, d.h. senkrecht zur Längs- und Querrichtung der Sohle). auf als in den benachbarten Bereichen. Somit wird die Stabilität in diesen Bereichen erhöht selbst wenn die Unterseite der Schale nur aus dem Unterseitenrand besteht.

Die vorliegende Erfindung wird nachfolgend unter Bezugnahme folgender Figuren näher erläutert.
- Fig. 1: zeigt eine perspektivische Darstellung eines Ausführungsbeispiels einer erfindungsgemäßen Sohle.
- Fig. 2: zeigt eine weitere perspektivische seitliche Ansicht der in Fig. 1 gezeigten Sohle.
- Fig. 3: zeigt in perspektivischer Darstellung die in Fig. 1 und 2 gezeigten Sohlen von unten.
- Fig. 4: zeigt in perspektivischer Darstellung ein bevorzugtes Ausführungsbeispiel einer Schale für eine Sohle gemäß der vorliegenden Erfindung.
- Fig. 5: zeigt das in Fig. 4 gezeigte Ausführungsbeispiel der Schale in einer perspektivischen Darstellung, die die Oberseite zeigt.
- Fig. 6: zeigt eine weitere Ausführungsform gemäß der vorliegenden Erfindung einer Schale mit einem integrierten dämpfenden Sohlenteil.
- Fig. 7: zeigt in perspektivischer Darstellung eine weitere Ausführungsform gemäß der vorliegenden Erfindung mit einer Kipphebelaufnahme für ein Steigeisen
- Fig. 8: zeigt das in Figur 7 gezeigte Ausführungsbeispiel von unten
- Fig. 9: zeigt ein hinteres Ende des in Figuren 7 und 8 gezeigten Ausführungsbeispiels
- Fig. 10: zeigt das in Figur 7 gezeigte Ausführungsbeispiel mit Profilelement
- Fig. 11: zeigt einen erfindungsgemäßen Schuh mit einer in den Figuren 7-10 gezeigten Sohle
- Fig. 12a: zeigt einen vertikalen Teilschnitt in Längsrichtung der erfindungsgemäße Sohle gemäß einem bevorzugten Ausführungsbeispiel
- Fig. 12b: zeigt einen vertikalen Teilschnitt senkrecht zur Schnittdarstellung in Fig.12a.

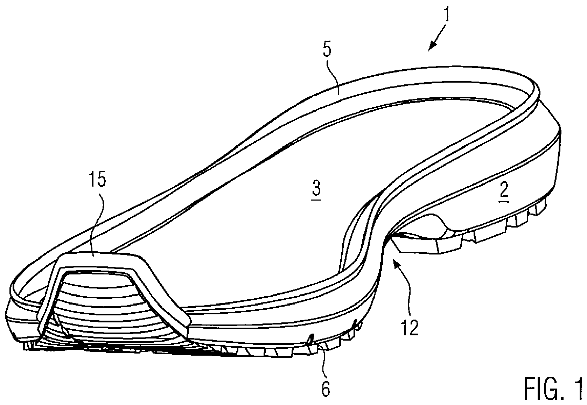

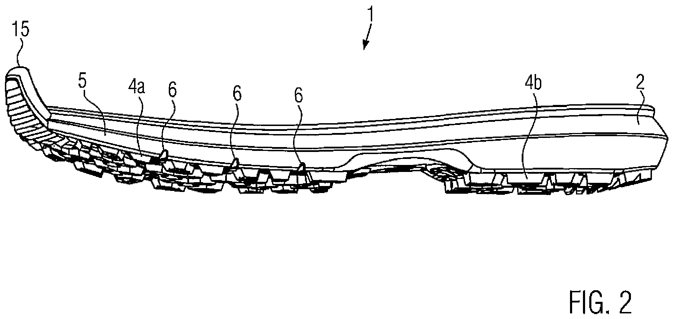

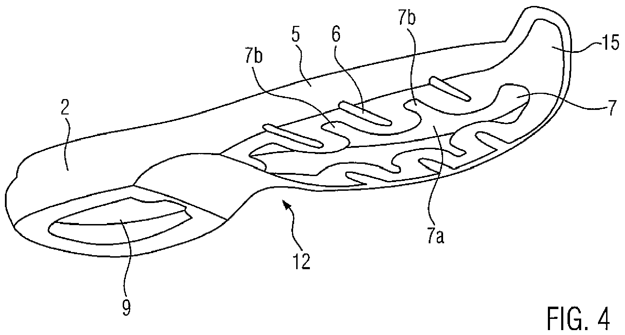

Fig. 1 zeigt ein Ausführungsbeispiel einer Sohle für einen Schuh, insbesondere Outdoor-Schuh, gemäß einer Ausführungsform der vorliegenden Erfindung in perspektivischer Darstellung. Wie Fig. 1 zu entnehmen ist, umfasst die Sohle eine Schale 2 aus Kunststoff. In der Schale 2 liegt ein integriertes dämpfendes Sohlenteil 3. Auf der Unterseite der Schale 2 ist zumindest ein Profilelement 4 aus rutschfestem Material befestigt, insbesondere aufgeklebt. Wie aus Fig. 4 und 2 hervorgeht, sind in diesem Ausführungsbeispiel zwei Profilelemente vorgesehen, ein Profilelement 4a im Vorderfußbereich 14 und ein Profilelement 4b im Fersenbereich 13.

Die Schale 2 ist derart ausgebildet, dass der Rand der Unterseite 12 der Schale schalenförmig nach oben gezogen ist und somit ein umlaufendes Randteil 5 bildet. In diesem Ausführungsbeispiel ist die Spitze 15 des Randteils 5 weiter nach oben gezogen als beispielsweise die seitlichen Randteile, um so einen idealen Schutz des Schuhs vor äußeren Einflüssen zu gewährleisten. Wie den Figuren zu entnehmen ist, steht das Randteil 5 über das Sohlenteil 3 nach oben vor.

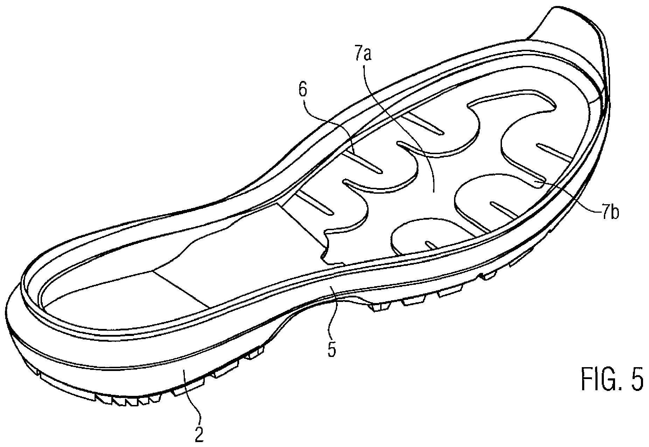

Fig. 4 und 5 zeigen die erfindungsgemäße Schale 2 im Detail.

Die Schale 2 ist aus Kunststoff ausgebildet, insbesondere aus einem thermoplastischen Polymer bzw. Elastomer, insbesondere TPU, d. h. thermisches Polyurethan. Ein solcher Werkstoff zeichnet sich dadurch aus, dass er stabil, abriebfest flexibel und elastisch sein kann und somit ideal geeignet für raue Outdoor-Bedingungen. Vorzugsweise kann beispielsweise Elastollan als Material für eine entsprechende Schale 2 verwendet werden Ein entsprechendes Material kann in gängiger Weise mit Hilfe einer Spritzgussverarbeitungsmaschine mit einer entsprechenden Form gefertigt werden. Das Material kann beispielsweise eine Shore-Härte von 55 Shore A bis 75 Shore A, insbesondere 65-75 Shore A, aufweisen. Um eine ausreichende Flexibilität der Sohle zu gewährleisten und den Tragekomfort zu erhöhen, weist die Schale 2 gemäß einem bevorzugten Ausführungsbeispiel der Erfindung zumindest im Vorderfußbereich 14 einen Durchbruch 7, 7a auf. Dabei kann der Durchbruch 7a im Vorderfußbereich einen mittleren Durchbruchsbereich 7a umfassen, der sich im Wesentlichen in Längsrichtung der Sohle erstreckt und länglich ausgebildet ist, wobei die Längsrichtung bzw. Achse eine Richtung ist, die sich von der Ferse zur Spitze erstreckt. Vorteilhafterweise gibt es mehrere Seitendurchbruchsbereiche 7b, die sich seitlich von dem mittleren Durchbruchsbereich 7a jeweils nach außen in Richtung Rand 5 der Schale 2 erstrecken. Hier sind beispielsweise drei entsprechende Seitendurchbruchsbereiche vorgesehen. Eine entsprechende Anordnung ermöglicht Stabilität und Flexibilität zugleich. Es ist auch möglich, dass im Vorderfußbereich 14 Schlitze 6 in der Unterseite der Schale 2 ausgebildet sind, deren Höhe vorzugsweise kleiner als die Höhe der Schale an der entsprechenden Stelle ist. Das heißt, dass sie keinen Durchbruch darstellen, sondern nur eine Reduzierung der Stärke der Unterseite der Schale in diesem Schlitzbereich. Hier liegen die Schlitze 6 zwischen den seitlichen Durchbruchsbereichen 7b und erstrecken sich nicht ganz bis zum Durchbruchsbereich 7a. Es ist aber auch möglich, dass die Schlitze sich komplett durch die Unterseite der Schale hindurch erstrecken. Wie aus Fig. 5 hervorgeht können entsprechende Schlitze 6 auch an der gegenüberliegenden Seite der Schale angeordnet sein. Die Unterseite 12 der Schale 2 kann im Fersenbereich ebenfalls eine Aussparung 9 aufweisen, in die, wie nachfolgend noch näher erläutert wird, ein rutschfestes Profilelement 4 eingelegt werden kann.

In diese Schale wird nun ein dämpfendes Sohlenteil 3 eingegossen. Dazu ist ebenfalls ein kommerzielles Spritzgussverfahren geeignet, so dass während der Produktion ein fester Verbund zwischen Sohlenteil 3 und Schale 2 entsteht.

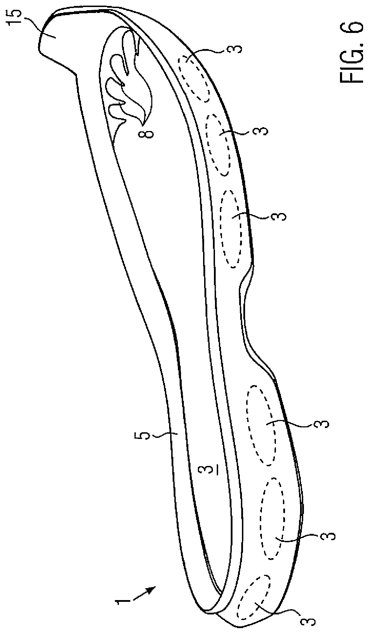

Als Material für das Sohlenteil 3 eignet sich insbesondere ein elastischer, federnder Kunststoff, insbesondere PU, d. h. Polyurethan, insbesondere (hier z.B. Elastophan). Vorzugsweise weist das dämpfende Sohlenteil eine homogene Dichte auf. Auch EVA ist geeignet. Das Sohlenteil 3 zeichnet sich dadurch aus, dass es im Gegensatz zur Schale 2 eine geringe Härte aufweist, beispielsweise von 30 Shore A - 50 Shore A, insbesondere 35-50 Shore A. Außerdem zeichnet sich das Sohlenteil 3 dadurch aus, dass es dämmende und dämpfende Eigenschaften aufweist also z.B. eine kleinere Stauchhärte als die Schale. Wie aus Fig. 1 hervorgeht, steht der Rand der Schale 2 über das Sohlenteil 3. Es ist möglich, wie aus Fig. 6 hervorgeht, dass die Schale 2 derart ausgebildet ist, dass an der Innenseite des Randteils sich mehrere Vorsprünge 8 nach innen erstrecken. Entsprechendes ist insbesondere in Fig. 6 im vorderen Bereich des Vorderfußbereichs erkennbar. Aber auch im hinteren Bereich der Sohle können entsprechende Vorsprünge vorgesehen sein, die sich ins Innere des Sohlenteils 3 hinein erstrecken, was den Verbund zwischen Sohlenteil 3 und Schale 2 und die Stabilität verbessert.

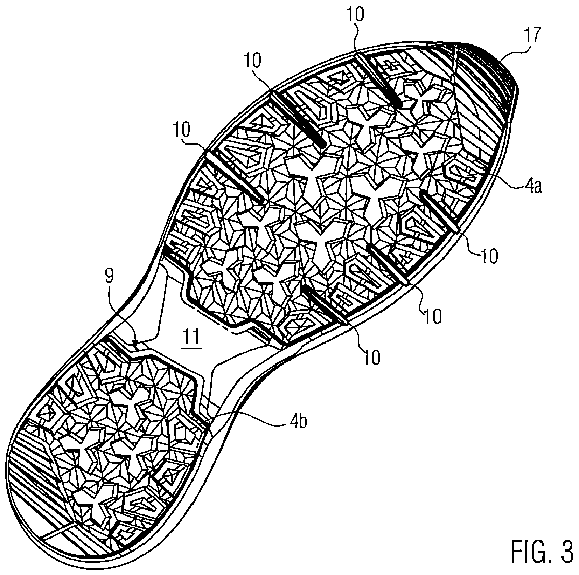

Wenn das Sohlenteil 3 in die Schale 2 eingegossen wird, und die Schale 2 die Aussparungen an der Unterseite 12 aufweist, wie aus Fig. 5 und 4 hervorgeht, ist das Sohlenteil 3 teilweise freigelegt. Zum Abdecken des inneren Sohlenteils 3 und zur Gewährleistung der Rutschfestigkeit ist daher mindestens ein Profilelement 4, 4a, 4b aus rutschfestem Material vorgesehen. Als Material eignet sich hier Gummi. Wie insbesondere aus den Fig. 2 und 3 hervorgeht, ist in diesem Ausführungsbeispiel im Vorderfußbereich 14 ein Profilelement 4a angeordnet und im Fersenbereich 12 ein Profilelement 4b. Die Schale 2 kann beispielsweise so ausgebildet sein, dass sie an ihrer Unterseite zumindest eine Aussparung 9 im Fersenbereich 13 aufweist (wie beispielsweise aus Fig. 4 hervorgeht) oder auch im Vorderfußbereich 14 eine entsprechende Aussparung hat bzw. ein Rand 5 in diesem Bereich nach unten gezogen ist und somit Teil einer umlaufenden Begrenzung ist. In diese Aussparung 9 kann nun ein jeweiliges Profilelement 4 eingelegt und eingeklebt werden. Es ist aber auch möglich, ein jeweiliges Profilelement ohne Aussparung an der Unterseite anzubringen. Wie insbesondere aus Fig. 2 hervorgeht, weist das Profilelement beispielsweise eine Profilhöhe h in einem Bereich von 2 bis 5mm auf. Zur Verbesserung der Flexibilität weist auch ein im Vorderfußbereich 14 angeordnete Profilelement 4a Schlitze 10 auf, die sich vorzugsweise durch das ganze Profilelement 4a hindurch erstrecken, und insbesondere zumindest teilweise bis zu den Schlitzen 6, so dass die Schlitze 10 zumindest abschnittsweise mit den Schlitzen 6 in Verbindung stehen, d. h. übereinander an entsprechenden Stellen zumindest abschnittsweise angeordnet sind. Somit ist eine gute Flexibilität der Sohle gewährleistet, und da die Schlitze 6 sich vorzugsweise nicht bis zu dem Sohlenteil 3 hindurch erstrecken, bleibt das Sohlenteil 3 auch von äußeren Einflüssen geschützt. Bei diesem Ausführungsbeispiel ist zwischen den Profilelementen 4a, 4b ein freigelegter Bereich 11 der Schale 2 zu erkennen. In diesem Ausführungsbeispiel ist der freigelegte Bereich zurückversetzt im Vergleich zur Unterseite der gesamten Sohle 1, d. h., wenn die Sohle am Boden aufliegt, ist der Bereich 11 nicht in Kontakt mit dem Boden.

Wenn auch nicht dargestellt, kann auch das Randteilt 5 zumindest abschnittsweise Materialschwächungen, Schlitze oder Aussparungen insbesondere in den gegenüberliegenden Seitenbereichen (vorzugsweise zumindest im Vorfußbereich) aufweisen, um ein besseres Abrollverhalten zu ermöglichen. Die erfindungsgemäße Sohle bringt den Vorteil mit sich, dass sie einerseits robust und beständig ist, also geeignet für den Outdoor-Bereich, andererseits auch gleichzeitig flexibel, so dass gute Abrolleigenschaften gegeben sind. Gleichzeitig ist eine entsprechende Sohle rutschfest durch die Profilelemente aus Gummi, die zusätzlich noch die Funktion aufweisen, dass sie das durch die Schale 2 freigelegte Sohlenteil 3, bzw. den freigelegten Bereich, abdecken können. Somit kommt dem Profilelement eine besonders vorteilhafte Doppelfunktion zu. Durch das eingegossene Sohlenteil hat die Sohle auch dämpfende Wirkung. Die Erfindung betrifft auch einen Schuh (nicht dargestellt) mit einer entsprechenden Sohle. Die Sohle wird dabei in gängiger Art und Weise am Oberteil des Schuhes befestigt.

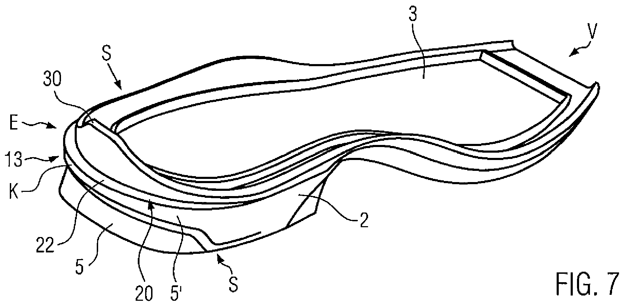

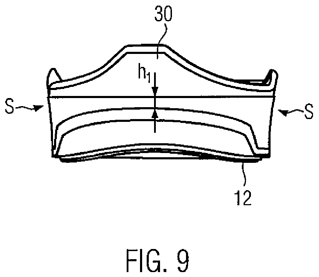

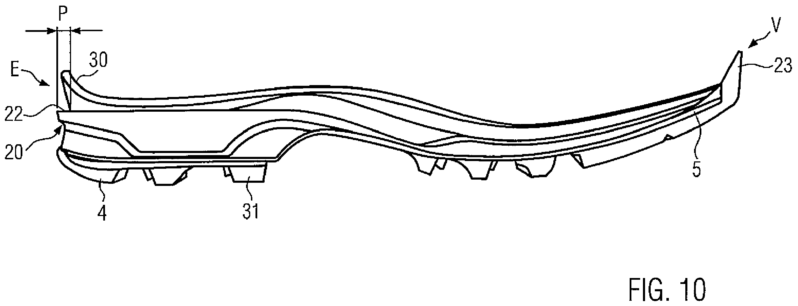

Fig. 7 bis 12 zeigen ein weiteres Ausführungsbeispiel gemäß der vorliegenden Erfindung. Dieses Ausführungsbeispiel entspricht im Wesentlichen den im Zusammenhang mit Fig. 1 bis 6 gezeigten Ausführungsbeispiel, wobei jedoch in vorteilhafterweise eine Kipphebelaufnahme in der Schale 2 ausgebildet ist. Fig. 7 zeigt die Schale 2 mit dem dämpfenden Sohlenteil 3, wobei jedoch das Profilelement nicht dargestellt ist. Im Fersenbereich 13 des nach oben gezogenen Randes der Schale ist dazu ein Teil des Randes derart ausgebildet, dass er nach außen vorspringt, derart, dass sich eine Auflagefläche 22 und somit auch eine entsprechende Kante K für den Kipphebel eines Steigeisens bildet. Das Steigeisen kann also z.B. in gängiger Weise über einen Bügel oder ein Körbchen an dem vorderen Sohlenrand und über einen Kipphebel am hinteren Ende E der Sohle an der Kipphebelaufnahme 20 befestigt werden. Somit wird auf einfache Art und Weise ein steigeisenfester Schuh realisiert. Wie insbesondere aus Fig. 7 und 9 hervorgeht, erstreckt sich der vorspringende Teil des Randes 5' spangenartig, d. h. U-förmig um den Fersenbereich von einem hinteren Ende E der Schale bis zu den Seiten S der Schale 2. Die Breite p der Fläche 22 (siehe z.B. Fig.10) liegt z.B. in einem Bereich von 2 bis 10 mm, insbesondere 4 -6 insbesondere 5 mm, d. h. dass die Auflagefläche 22 von dem Rand 5 z.B4 bis 6 mm vorspringt. Der vorspringende Teil des Randes ist derart verstärkt, dass er (im Querschnitt betrachtet) eine größere Wandstärke aufweist als ein Bereich des Randes unterhalb des verstärkten Randes, so dass im Bereich des Kipphebels maximale Stabilität gewährleistet werden kann. Wie aus Fig. 7 hervorgeht, nimmt die Breite der Auflagefläche 22 zu den Seiten S hin ab. Wie aus Fig. 9 hervorgeht, weist der vorspringende Teil des Randes am hinteren Ende E der Schale 2 eine erste Höhe h1 auf, die vom hinteren Ende E der Schale bis zu den Seiten S hin zunimmt. Das heißt, während die Fläche 22, die z.B. im Wesentlichen horizontal verläuft, im Wesentlichen auf gleichem Niveau bleibt, sich der vorspringende Teil in einer Richtung zur Unterseite 12 der Schale 2 vergrößert, d. h., dass die Höhe an den Seiten S größer ist als im mittleren Endbereich.

Wie aus den Fig. 7 bis 9 zu erkennen ist, weist der Rand noch einen sich von der Fläche 22 aus nach oben erstreckenden Vorsprung 30 auf, der sich ebenfalls bis in die Seitenbereiche S erstreckt und der dann direkt in Kontakt mit dem Schuhmaterial steht.

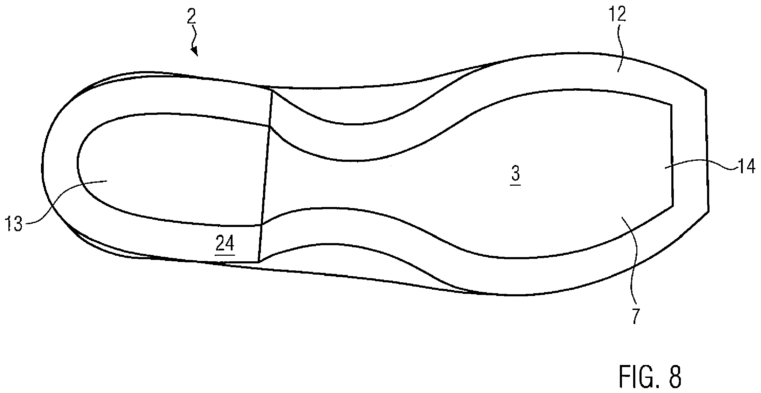

Fig. 8 zeigt die Unterseite 12 der Sohle 1. Bei diesem Ausführungsbeispiel kann beispielsweise ein Durchbruch 7, durchgängig von einem Vorfußbereich 14 bis zu einem Fersenbereich 13 verlaufen und wird dabei von einem Unterseitenrand 24 umgeben. Wie aus Fig. 8 hervorgeht, wird dadurch das dämpfende Sohlenteil 3 freigelegt und wird dann von dem Profilelement abgedeckt. Dies ist jedoch nur ein Beispiel. Grundsätzlich können auch mehrere Durchbrüche vorgesehen sein. Eine in Fig. 8 gezeigte Ausführungsform ermöglicht Stabilität im äußeren Bereich bei gleichzeitiger Gewichtsreduktion durch das Ausbilden des großflächigen Durchbruchs 7.

Fig. 10 zeigt das in den Fig. 7 bis 9 gezeigte Ausführungsbeispiel mit aufgesetztem Profilelement 4. Das Profilelement 4 wird beispielsweise auf die Unterseite 12 der Schale und das freigelegte Sohlenteil geklebt. Wie Fig. 10 zu entnehmen ist, weist das Profilelement 4 an seinem vorderen Ende V eine Spitze 23 auf, die weiter nach oben gezogen ist als die angrenzenden seitlich nach oben gezogenen Randteile 5 der Schale 2.

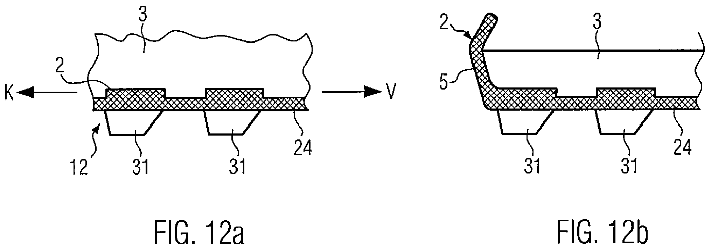

Figur 12a zeigt einen vertikalen Teilschnitt in Längsrichtung durch die Sohle im Bereich des Unterseitenrandes 24. Es ist besonders vorteilhaft, wenn die Schale im Bereich über dem Profilstollen 31 eine größere Wandstärke (in einer Richtung betrachtet die nach oben gerichtete ist, d.h. senkrecht zur Längs- und Querrichtung der Sohle) aufweist, als in den benachbarten Bereichen. Dadurch, dass in diesen Bereichen das Material z.B. das TPU dickwandiger ausgeprägt ist, können die Profilstollen z.B. Gummiprofilstollen stabilisiert werden. Somit wird die Stabilität in diesen Bereichen erhöht selbst wenn die Unterseite der Schale nur aus dem Unterseitenrand 24 besteht. Wie aus Fig. 12b hervorgeht, die ein Teilschnitt der Sohle senkrecht zur Schnittdarstellung in Fig.12a ist, erstreckt sich die Verstärkung vorzugsweise über die äußeren Stollen 31 bis zum äußeren Rand 5 der Schale.

Aber auch bei anderen Ausführungsformen mit einer unterschiedlichen Unterseitenkonfiguration der Schale verleiht eine entsprechende Verstärkung der Schale in einem Bereich über den Profilstollen eine größere Stabilität.

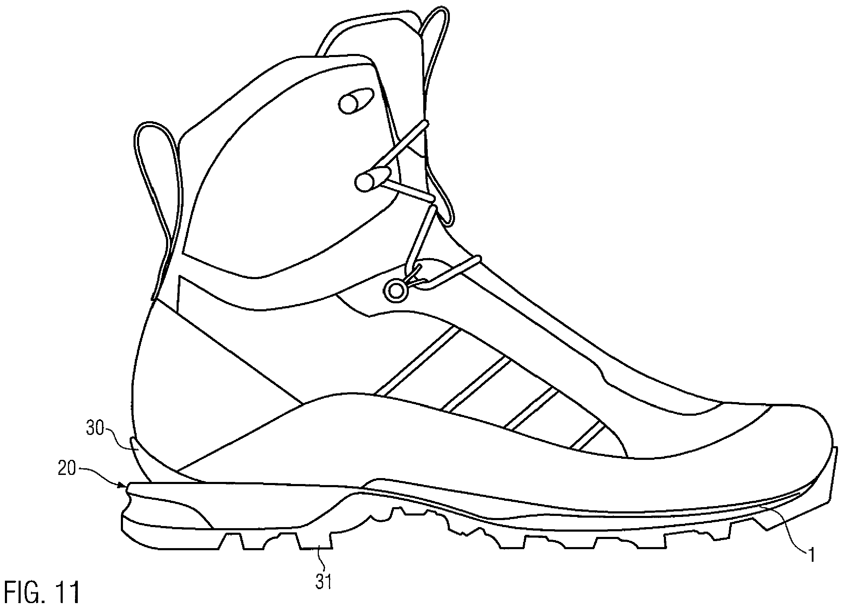

Fig 11 zeigt einen erfindungsgemäßen Schuh. Dabei kann die erfindungsgemäße Sohle an der Brandsohle des Schuhoberteils befestigt, insbesondere geklebt, sein.

## Patentansprüche

1. Sohle (1) für einen Schuh, insbesondere Outdoor-Schuh, mit
einer Schale (2) aus Kunststoff und
einem in der Schale (2) integrierten dämpfenden Sohlenteil (3),
wobei auf der Unterseite (12) der Schale (2) zumindest ein Profilelement (4, 4a, 4b) aus rutschfestem Material befestigt ist und wobei
das dämpfende Sohlenteil (3) in die Schale (2) eingegossen ist.

2. Sohle (1) nach Anspruch 1, **dadurch gekennzeichnet, dass** die Schale (2) aus einem thermoplastischen Polymer, insbesondere TPU, gebildet ist.

3. Sohle (1) nach mindestens einem der Ansprüche 1 oder 2, **dadurch gekennzeichnet, dass** das Sohlenteil (3) aus einem elastischen Kunststoff, insbesondere aus PU oder EVA gebildet ist.

4. Sohle (1) nach mindestens einem der Ansprüche 1 bis 3, **dadurch gekennzeichnet, dass** das rutschfeste Material aus Gummi gebildet ist.

5. Sohle (1) nach mindestens einem der Ansprüche 1 bis 4, **dadurch gekennzeichnet, dass** die Härte der Schale (2) größer ist als die Härte des Sohlenteils (3).

6. Sohle (1) nach mindestens einem der Ansprüche 1 bis 5, **dadurch gekennzeichnet, dass** die Schale (2) an der Unterseite (12) mindestens einen Durchbruch (7, 7a, 7b) aufweist, derart, dass das Profilelement (4) direkt an dem Sohlenteil (2) anliegt, insbesondere aufgeklebt ist, wobei der mindestens eine Durchbruch (7, 7a, b) vorzugsweise zumindest im Vorderfußbereich (14) ausgebildet ist.

7. Sohle (1) nach mindestens einem der Ansprüche 1 bis 6, **dadurch gekennzeichnet, dass** sich ein Profilelement (4, 4a) im Vorderfußbereich (14) befindet und ein Profilelement im Fersenbereich (13) und dazwischen die Schale vorzugsweise freigelegt ist, oder nur ein Profilelement (4, 4a) vorgesehen ist, das sich über die gesamte Unterseite der Sohle (1) vom Vorderfußbereich bis zum Fersenbereich (13) erstreckt.

8. Sohle (1) nach mindestens einem der Ansprüche 1 bis 7, **dadurch gekennzeichnet, dass** die Schale (2) eine Unterseite aufweist, deren Rand (5) schalenförmig nach oben gezogen ist und insbesondere entweder die Spitze (15) der Schale (2) weiter nach oben gezogen ist als die seitlich nach oben gezogenen Randteile (5) oder
die Spitze (23) des Profilelements (4,4 a, 4b) am vorderen Ende der Sohle weiter nach oben gezogen ist, als die seitlich nach oben gezogenen Randteile (5) der Schale (2)..

9. Sohle (1) nach mindestens einem der Ansprüche 1 bis 8, **dadurch gekennzeichnet, dass** sich von der Innenseite des nach oben gezogenen Randteils mehrere Vorsprünge nach innen in das Sohlenteil (3) hinein erstrecken.

10. Sohle (1), insbesondere nach mindestens einem der vorhergehenden Ansprüche, **dadurch gekennzeichnet, dass**
in dem Rand (5) der Schale (2) im Fersenbereich (13) eine Kipphebelaufnahme (20) für ein Steigeisen ausgebildet ist, wobei vorzugsweise
ein Teil des Rands (5') der Schale (2) nach außen vorspringt, derart dass sich eine Auflagefläche (22) für den Kipphebel ergibt.

11. Sohle (1) nach Anspruch 10, **dadurch gekennzeichnet, dass** der vorspringende Teil des Rands (5') derart verstärkt ist dass er eine größere Wandstärke aufweist, als ein Bereich des Randes unterhalb des verstärkten Randes (5'), und vorzugsweise sich der vorspringende Teil des Rands (5') spangenartig um den Fersenbereich von einem hinteren Ende (E) der Schale (2) bis zu den Seiten (S) der Schale (2) erstreckt.

12. Sohle nach mindestens einem der Ansprüche 10-11, **dadurch gekennzeichnet, dass** der vorspringende Teil des Rands (5') am hinteren Ende (E) der Schale (2) eine erste Höhe (h1) aufweist, die vom hinteren Ende (E) der Schale (2) bis zu den Seiten (S) hin zunimmt.

13. Sohle (1) nach mindestens einem der Ansprüche10-12, **dadurch gekennzeichnet, dass** die Schale (2) in ihrer Unterseite (12) mindestens einen Durchbruch (7) aufweist, wobei sich der mindestens eine Durchbruch vorzugsweise von einem Vorfußbereich (14) bis zu einem Fersenbereich (13) erstreckt, der von einem Unterseitenrand (24) begrenzt wird.

14. Sohle (1) nach mindestens einem der vorhergehenden Ansprüche, **dadurch gekennzeichnet, dass** die Schale (2) im Bereich von Profilstollen des Profilelements (4,4 a, 4b) eine größere Wandstärke aufweist als in den benachbarten Bereichen.

15. Schuh, insbesondere für den Outdoor- und Sportbereich, mit einer Sohle (1) nach mindestens einem der Ansprüche 1 bis 14.
